(19) Europäisches Patentamt
European Patent Office
Office européen des brevets

(11) EP 0 863 412 B1

(12) **FASCICULE DE BREVET EUROPEEN**

(45) Date de publication et mention
de la délivrance du brevet:
**28.04.2004 Bulletin 2004/18**

(51) Int Cl.⁷: **G01V 3/20**

(21) Numéro de dépôt: **98400470.5**

(22) Date de dépôt: **27.02.1998**

(54) **Système de tubes pour mesures électriques**

Röhrensystem für elektrische Messungen

Tube-system for electrical measurements

(84) Etats contractants désignés:
**DE ES FR GB**

(30) Priorité: **05.03.1997 FR 9702610**

(43) Date de publication de la demande:
**09.09.1998 Bulletin 1998/37**

(73) Titulaire: **COMPAGNIE DU SOL**
**92000 Nanterre (FR)**

(72) Inventeurs:
• **Lantier, François**
**38090 Villefontaine (FR)**

• **Hamelin, Jean-Pierre**
**92100 Boulogne (FR)**

(74) Mandataire: **Dronne, Guy et al**
**Cabinet Beau de Loménie**
**158, rue de l'Université**
**75340 Paris Cédex 07 (FR)**

(56) Documents cités:
**EP-A- 0 581 686      EP-A- 0 759 563**
**GB-A- 928 583        US-A- 2 376 168**
**US-A- 2 941 784      US-A- 3 293 542**

## Description

La présente invention a pour objet un système de tubes, notamment d'injection pour réaliser des mesures électriques.

De façon plus précise, l'invention concerne un système constitué par un ensemble de tubes dont la fonction est d'être introduits dans un forage réalisé dans le sol notamment mais non exclusivement pour effectuer à travers ces tubes, des injections notamment de béton ou le plus souvent de coulis afin de consolider le sol autour du forage réalisé.

Pour mettre en oeuvre cette technique, le plus souvent, on utilise des tubes dits à manchette qui consistent dans un ensemble de tubes raccordés successivement les uns aux autres et introduits dans le forage et par lesquels on injecte successivement à des niveaux différents le coulis de telle manière qu'il pénètre dans des conditions contrôlées dans le sol pour consolider celui-ci. Les tubes utilisés pour cette opération, qui sont appelés habituellement tubes à manchette, sont réalisés en un matériau isolant, tel que du PVC et comportent des trous d'injection qui sont obturés temporairement par des manchettes en matériau élastique qui sont déplacées sous l'effet de la pression du coulis injecté, permettant ainsi le passage de celui-ci hors des tubes et sa pénétration dans le sol à consolider.

Par ailleurs, on sait que lorsque l'on doit réaliser par injection de béton ou de coulis la consolidation du sol ou lorsqu'on se propose de le faire, il est important de pouvoir déterminer de façon précise les éventuelles inhomogénéités du sol afin de localiser plus particulièrement les zones dans lesquelles il faut procéder à cette injection. On sait également que lorsqu'une injection dans le sol a été réalisée, il est important de pouvoir contrôler si cette injection a bien produit les résultats de stabilisation souhaités par remplissage des fissures ou des zones poreuses.

Pour réaliser ces tests, on connaît en particulier des techniques de mesures électriques notamment décrites dans la demande de brevet européen n°581 686 déposée au nom de la demanderesse. Selon cette technique, on installe dans un forage une sonde comportant une succession d'électrodes régulièrement espacées qui servent à la fois d'électrodes d'injection de courant dans le sol et d'électrodes de mesure de différences de potentiel résultant de cette injection de courant. On peut ainsi effectuer des mesures de résistivité du sol correspondant à des niveaux différents du forage et à des distances différentes par rapport à l'axe du forage.

Cependant, pour pouvoir mettre en oeuvre ces techniques par mesures électriques, il est nécessaire bien sûr qu'il existe une continuité de matériaux conducteurs entre les électrodes proprement dites et le sol que l'on veut analyser. Or, dans le cas des tubes standard d'injection, ceux-ci sont des isolants électriques et il est donc impossible d'utiliser les dispositifs connus pour la mise en oeuvre de ces mesures électriques.

Le même problème se pose lorsqu'on met en place des systèmes de tubes de protection dans les forages d'exploration réalisés par exemple dans le front de taille d'un tunnelier.

On comprend qu'il serait particulièrement intéressant de pouvoir mettre en oeuvre ces techniques par mesure électrique après la mise en place des tubes notamment d'injection et en particulier de pouvoir utiliser ces techniques après que l'injection ait été réalisée afin de vérifier que les résultats de l'injection sont satisfaisants dans toute la zone qui entoure le forage d'injection afin de pouvoir remédier éventuellement à des défauts sans qu'il soit nécessaire au préalable de procéder à l'enlèvement des tubes d'injection.

Un objet de l'invention est donc de fournir un système de tubes du type défini précédemment qui permette néanmoins de réaliser les mesures électriques énoncées ci-dessus afin de permettre une exploration des caractéristiques du sol entourant le forage dans lequel les tubes d'injection ont été mis en place.

Pour atteindre ce but l'invention prevoit un système pour injecter un matériau fluide d'injection et faire des mesures électriques conformément à la revendication 1.

On comprend qu'ainsi, grâce à l'invention, les tubes notamment d'injection continuent à remplir leur fonction et sont notamment constitués par des tubes à manchette, mais que, du fait de la présence des électrodes annulaires sur la face externe de ces tubes, il est possible d'utiliser ces électrodes comme électrodes d'émission ou électrodes de mesure par exemple lors de la détermination électrique des caractéristiques du sol environnant le forage dans lequel les tubes ont été montés. En effet, il existe une continuité électrique entre la face externe des tubes et le sol environnant le forage, notamment par l'intermédiaire du matériau qui a été injecté.

Selon un mode préféré de mise en oeuvre, chaque tube comporte à chaque extrémité des premiers moyens de verrouillage et chaque électrode est constituée par un manchon conducteur présentant une première et une deuxième extrémité, ainsi qu'une face interne et une face externe, ladite face externe des manchons formant lesdites zones annulaires conductrices, les premières et deuxièmes extrémités des manchons conducteurs étant munies de deuxièmes moyens de verrouillage aptes à coopérer avec les premiers moyens de verrouillage

Selon ce mode préféré de mise en oeuvre, on comprend que l'assemblage des différents tubes, notamment des tubes à manchette, peut être réalisé aisément à l'aide de ces manchons qui constituent une électrode dont une face est tournée vers la face externe des tubes et est donc en relation électrique avec le sol entourant le forage et dont la face interne débouche à l'intérieur de l'ensemble des tubes, rendant ainsi aisée la liaison électrique entre l'électrode et les appareils électriques disposés à la surface du sol.

Selon encore des modes de réalisation préférés, on peut prévoir que certaines électrodes aient des formes ou dispositions particulières pour autoriser des mesures électriques également de type particulier. Plus spécialement, on peut prévoir que l'électrode la plus profonde présente des moyens pour éviter sa polarisation de telle manière qu'on puisse mettre en oeuvre une technique de mesure électrique par la méthode de polarisation spontanée dont l'utilité sera explicitée ultérieurement pour contrôler la qualité des "fonds injectés". Il est également possible de prévoir que certaines des électrodes, dites électrodes additionnelles n'aient pas une forme annulaire, mais simplement une forme de secteur de cercle, de telle manière que, lorsque ces électrodes sont alimentées en courant, les lignes de potentiel créées par ces électrodes ne présentent pas une symétrie de révolution autour de l'axe des tubes et donc autour de l'axe du forage, afin de localiser en azimut les éventuelles singularités du sol.

D'autres caractéristiques et avantages de l'invention apparaîtront mieux à la lecture de la description qui suit de plusieurs modes de réalisation de l'invention donnés à titre d'exemples non limitatifs. La description s réfère aux figures annexées sur lesquelles :

- la figure 1 est une vue d'ensemble montrant un système de tubes selon l'invention mis en place dans un forage ;
- la figure 2 montre un tube d'injection à manchette adapté à la mise en oeuvre de l'invention ;
- la figure 3 montre en coupe axiale un mode préféré de réalisation des manchons formant électrode ;
- la figure 4 montre un mode préféré de réalisation des connexions électriques entre les électrodes des tubes et l'appareillage électrique en surface ;
- la figure 5 montre une variante de réalisation des électrodes et des liaisons électriques de ces électrodes vers les appareils en surface ;
- la figure 6a montre en coupe verticale un mode de réalisation d'un manchon correspondant à une électrode à secteur ; et
- la figure 6b est une vue de la figure 6a en coupe selon la ligne BB.

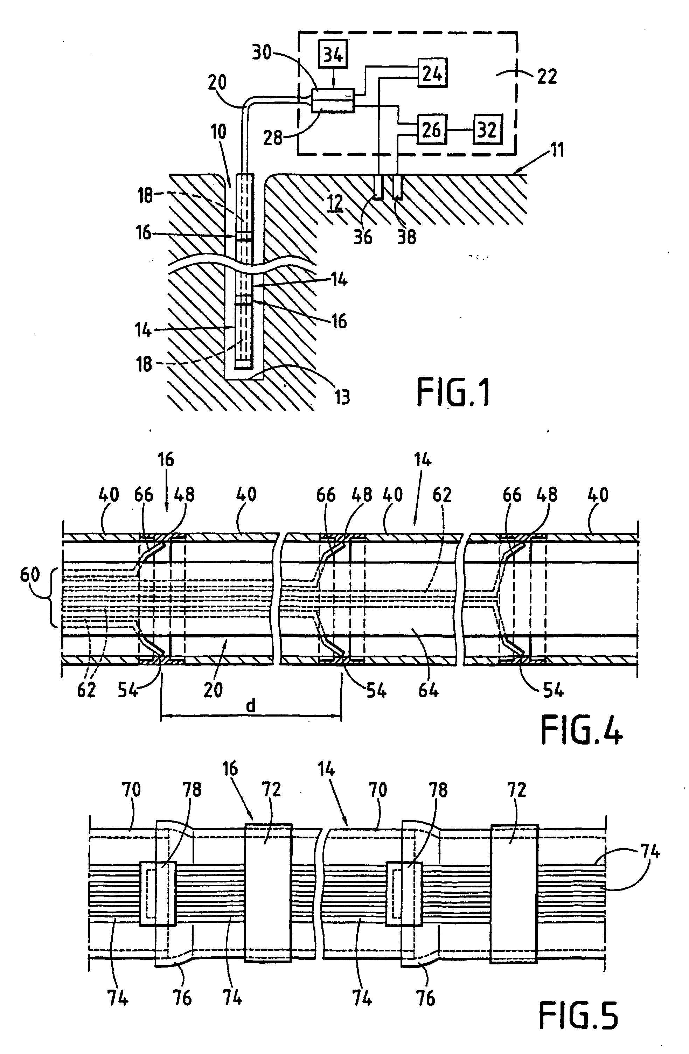

En se référant tout d'abord à la figure 1, on va décrire l'ensemble du système de tubes mis en place pour permettre la réalisation de mesures électriques dans un forage, dans le cas où ces tubes sont des tubes d'injection.

Sur cette figure, on a représenté un forage 10 qui est, dans ce cas particulier, vertical, réalisé dans le sol 12 dont on a figuré par 11 la surface. A l'intérieur du forage 10, on a mis en place une succession de tubes d'injection portant la référence générale 14, ces différents tubes d'injection étant reliés les uns aux autres pour former une conduite continue entre l'extrémité supérieure du forage et son fond 13. Comme le montre schématiquement la figure, les différents tubes d'injection 14 comportent des électrodes conductrices 16 régulièrement réparties et qui sont réalisées de telle manière qu'elles présentent une face externe dans la continuité de la face externe des tubes 14. Sur cette figure, on a également représenté de façon schématique des connexions électriques 18 qui permettent de relier chacune des électrodes 16 à un ou plusieurs câbles électriques externes 20 servant à relier chaque connexion électrique 18 à un ensemble d'appareils électriques portant la référence générale 22. Ces appareils électriques comprennent essentiellement une source d'alimentation électrique 24 et un appareil de mesure de différence de potentiel 26. Pour relier individuellement et sélectivement chaque conducteur 18 et donc chaque électrode 16, soit à l'appareil de mesure 26, soit à la source d'alimentation électrique 24, soit encore à ne relier une électrode à aucun appareil, le câble 20 est relié à l'entrée de deux commutateurs ou multiplexeurs 28 et 30, qui permettent ainsi de relier une ou plusieurs électrodes 16 soit à la source d'alimentation électrique 24, auquel cas les électrodes se comportent en électrodes d'émission, soit de relier une ou plusieurs électrodes au dispositif de mesure de différence de potentiel 26, auquel cas la ou les électrodes se comportent en électrodes de mesure. L'appareil de mesure 26 est de préférence associé à un enregistreur 32 qui permettra l'enregistrement des mesures et leur exploitation. De préférence également, un système par exemple informatique de commande 34 permet de commander à l'aide d'un programme les différentes positions des commutateurs ou multiplexeurs 28 et 30 en fonction du type de mesure électrique du sol que l'on veut mettre en oeuvre.

Comme cela est bien connu, dans le cas où l'on veut faire des mesures de résistivité du sol à différentes profondeurs, de préférence la source d'alimentation électrique 24 est également reliée à une électrode montée dans le sol 36 qui, associée aux électrodes 16 activées en électrodes d'émission, permet de créer les lignes de potentiel dans le sol. De même, de préférence, une deuxième électrode de masse 38 est également montée dans le sol et reliée à l'appareil de mesure 26 de telle manière que les mesures de potentiel soient réalisées d'une part par une des électrodes 16 et d'autre part par l'électrode 38.

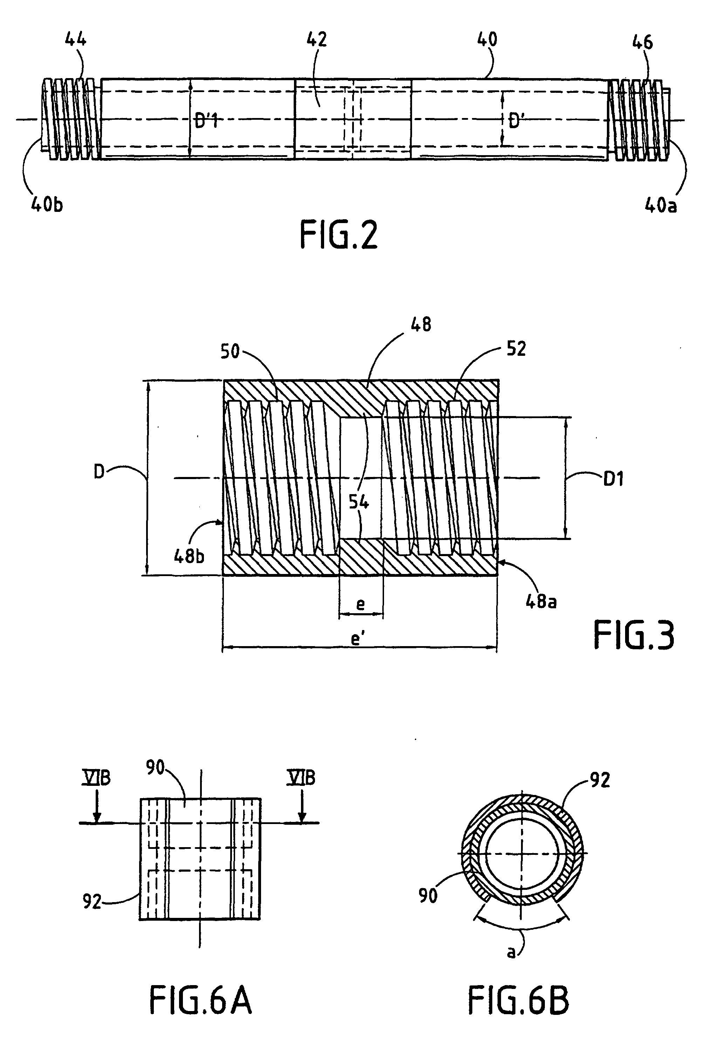

En se référant maintenant aux figures 2 et 3, on va décrire un mode préféré de réalisation du système de tubes comportant les électrodes. Les tubes d'injection, réalisés en un matériau électriquement isolant, sont de préférence des tubes à manchette 40 pour lesquels on a représenté schématiquement la manchette déformable 42 dans leur partie médiane. Selon l'invention, les extrémités 40a et 40b du tube 40 sont munies sur leur face externe de filetages 44 et 46. Comme le montre la figure 3, les électrodes 16 sont de préférence réalisées à l'aide de manchons conducteurs 48 par exemple réalisés en aluminium. Ces manchons conducteurs comportent à leurs extrémités 48a et 48b des filetages 50 et 52 réalisés sur leur face interne. De préférence, le diamètre externe D du manchon 48 est égal au diamètre externe D' du tube 40 et le diamètre interne D1 du manchon est égal au diamètre interne D'1 du tube. Comme le montre la figure 3, les deux filetages 50 et 52 laissent une zone centrale interne 54 dépourvue de filetage. Cette zone 54 a de préférence une longueur e, alors que le manchon lui-même 48 a une longueur e'.

En vissant les manchons 48 sur les extrémités successives des tubes 40, on obtient ainsi des tubes à manchette avec une électrode constituée par les manchons 48 intercalée entre deux tubes successifs. On comprend que chaque manchon formant électrode présente une surface externe tournée vers le sol de longueur e' et une face interne constituée par l'épaulement 54 de longueur e relativement réduite. En revanche, on comprend que les manchons 48 n'introduisent aucune singularité de diamètre par rapport aux tubes d'injection à manchette 40. On obtient ainsi un ensemble de tubes 40 entre lesquels sont interposées à distance régulière des électrodes 48. Cette distance est, par exemple, égale à 33 cm.

En se référant maintenant à la figure 4, on va exposer un mode préféré de réalisation de la connexion électrique entre les manchons conducteurs formant électrode 48 et le câble électrique 20. De préférence, les moyens de connexion électrique 60 sont constitués par une sonde dans laquelle sont disposés les conducteurs 62 destinés à relier chaque électrode au câble 20, cet élément présentant une isolation électrique externe 64 et une souplesse suffisante pour pouvoir être introduit à l'intérieur du conduit constitué par les tubes 40. Des contacts électriques externes tels que 66 font saillie hors de l'isolant 64 de l'ensemble de connexion 60 avec un pas d qui correspond à la distance entre deux manchons conducteurs 48 consécutifs. Chaque contact électrique 66 est relié à un conducteur 62. De préférence, ces contacts électriques 66 présentent une certaine élasticité pour assurer un bon contact électrique entre le conducteur 62 et la face interne 54 de chaque manchon conducteur.

Selon un premier mode de réalisation, les moyens de connexion électrique 60 font toute la longueur du système de tube 40. Les contacts électriques externes 66 sont en nombre égal au nombre de manchons conducteurs 48 ou à un sous-multiple du nombre de manchons conducteurs.

Selon un deuxième mode de réalisation, les moyens de connexion électrique 60 ne font qu'une partie de la longueur du système de tubes 40. Dans ce cas, pour réaliser l'ensemble des mesures électriques correspondant aux différents niveaux et aux différentes distances par rapport à l'axe du forage, il sera nécessaire de déplacer les moyens de connexion 60 à l'intérieur des tubes 40.

Selon le mode de réalisation décrit précédemment, les électrodes d'émission ou de mesure sont réalisées par les manchons conducteurs interposés entre deux tubes d'injection consécutifs. Sur la figure 5, on a représenté de façon schématique un autre mode de réalisation des électrodes annulaires. Sur chaque tube d'injection, qui peut être un tube à manchette 70, on réalise une métallisation externe annulaire 72 constituant une électrode. Sur la face externe du tube 70, on réalise par exemple sous forme de circuits imprimés, des conducteurs électriques 74, s'étendant selon la direction de l'axe du tube, chaque conducteur électrique 74 étant relié à une électrode 72 réalisée sur un tube 70. Au niveau de l'emboîtement 76 entre deux tubes consécutifs, il est bien-sûr nécessaire de prévoir un système d'interconnexion électrique 78 entre les éléments conducteurs 74 de deux tubes consécutifs afin d'assurer la continuité électrique entre les différentes électrodes 72 et le câble électrique externe 20. On comprend que l'on pourrait utiliser différents modes de réalisation des électrodes 72 à condition de prévoir que les électrodes soient entièrement réalisées sur la face externe ainsi que les conducteurs électriques, afin d'éviter les problèmes de traversée des tubes d'injection fabriqués en matériau isolant. On comprend que dans la solution préférée qui consiste à réaliser les électrodes à l'aide des manchons conducteurs, cette traversée de l'épaisseur des tubes d'injection est réalisée par les manchons conducteurs eux-mêmes.

Dans la description précédente, les électrodes obtenues sont adaptées au cas où les mesures électriques consistent dans la détermination de la résistivité du sol environnant le forage à l'aide d'électrodes d'émission et d'électrodes de mesure. Cependant, on sait que d'autres types de mesures électriques peuvent être réalisés dans un tel forage d'injection de béton ou de coulis. C'est en particulier le cas de la mesure de la polarisation spontanée dans le sol lors de la réalisation du confinement d'une zone de terrain à l'aide de tranchées en béton et d'un fond injecté. Pour vérifier l'étanchéité de ce confinement, il est connu de réaliser un pompage intensif des eaux résiduelles. Lors de ce pompage, il existe une modification de la polarisation électrique du milieu sous l'effet de la circulation de l'eau. Cette modification peut avantageusement être mesurée par des électrodes régulièrement réparties à proximité du fond de la structure sur toute la surface de ce fond. On comprend que dans ce cas, l'électrode de mesure est nécessairement en contact avec le sol. En outre, comme il s'agit de polarisation spontanée, les niveaux de tension à mesurer sont très faibles. Pour réaliser cette électrode, il est donc intéressant d'utiliser par exemple un manchon du même type que le manchon 48 décrit à la figure 3 mais dont la face externe est revêtue d'un système antipolarisant. Ce système est par exemple constitué par une paroi poreuse assurant le confinement d'un matériau électrolytique tel que du sulfate de cuivre. On évite ainsi la polarisation par oxydation de cette électrode constituée par le manchon.

On sait également que les mesures par résistivité des singularités dans le sol à l'aide de la technique d'électrodes d'émission et d'électrodes de mesure permettent de détecter la cote d'une singularité, mais non son orientation en azimut par rapport à l'axe du sondage. Pour résoudre ce problème, il est possible de prévoir que certains des manchons conducteurs, ou plus généralement des électrodes conductrices portées par les tubes ne soient plus annulaires, mais se présentent, quant à leur face active, sous forme de secteurs angulaires. C'est ce que l'on a représenté sur les figures 6a et 6b. Dans ce cas, par exemple, le manchon référencé 90 identique au manchon 48 est entouré par une couche isolante électrique 92 qui ne laisse apparaître qu'un secteur angulaire $\underline{a}$ de l'électrode constituée par le manchon 90. Pour avoir un caractère nettement directionnel, le secteur angulaire $\underline{a}$ est égal à $\frac{2\pi}{n}$. avec n > 2 Par exemple, $\underline{n}$ est égal à 6. On obtient ainsi une électrode capable d'émettre un champ électrique directionnel selon une direction angulaire privilégiée par rapport à l'axe du forage. Grâce à ce type d'électrode, il est alors possible, après avoir déterminé la cote d'une singularité dans le sol, d'utiliser plusieurs électrodes du type représenté sur les figures 6 présentant des secteurs d'orientations différentes. La comparaison des mesures ainsi effectuée correspondant à une même cote permet de déterminer l'azimut de la singularité.

Dans la description précédente on a considéré le cas de tubes d'injection de béton ou de coulis. il va cependant de soi qu'on ne sortirait pas de l'invention si les tubes isolants mis en place dans le forage, qui peut être horizontal ou vertical, avaient une autre fonction que l'injection, par exemple une fonction de protection du forage contre les infiltrations d'eau.

## Revendications

1. Système pour injecter un matériau fluide d'injection et faire des mesures électriques dans un forage comprenant une pluralité de tubes comportant des moyens de raccordement les uns aux autres, chaque tube présentant une face interne et une face externe, lesdits tubes étant destinés à être introduits dans un forage creusé dans le sol **caractérisé en ce que** chaque tube est réalisé en un matériau isolant, la paroi interne desdits tubes formant une conduite pour la circulation d'un matériau fluide d'injection, chaque tube comportant au moins un orifice d'injection équipé d'une manchette déformable ; et **en ce qu'**au moins certains desdits tubes comportent sur leur face externe une zone annulaire conductrice apte à constituer une électrode ; lesdites zones conductrices étant isolées les unes des autres ; et **en ce qu'**il comprend en outre :

   - des appareils électriques disposés à la surface du sol dans lequel est réalisé le forage ; et
   - des éléments de liaison électrique pour relier individuellement au moins certaines desdites zones annulaires conductrices auxdits appareils électriques.

2. Système selon la revendication 1 **caractérisé en ce que** chaque tube comporte à chaque extrémité des premiers moyens de verrouillage, **en ce que** chaque zone annulaire conductrice est constituée par un manchon conducteur, constituant un moyen de raccordement présentant une première et une deuxième extrémité, ainsi qu'une face interne et une face externe, ladite face externe des manchons formant lesdites zones annulaires conductrices, les premières et deuxièmes extrémités des manchons conducteurs étant munies de deuxièmes moyens de verrouillage aptes à coopérer avec les premiers moyens de verrouillage desdits tubes, par quoi les tubes sont raccordés entre eux par lesdits manchons conducteurs.

3. Système selon la revendication 2, **caractérisé en ce que** les premiers moyens de verrouillage des tubes consistent en un filetage réalisé sur la face externe desdits tubes, et **en ce que** les deuxièmes moyens de verrouillage consistent en un filetage réalisé dans la face interne desdits manchons apte à coopérer avec un filetage desdits tubes, par quoi la longueur de la face externe d'un manchon est supérieure à celle de sa face interne.

4. Système selon l'une quelconque des revendications 2 et 3, **caractérisé en ce que** tous les tubes ont sensiblement la même longueur par quoi la distance $\underline{d}$ entre les faces internes de deux manchons conducteurs successifs est sensiblement constante, et **en ce que** les éléments de liaison électrique comprennent un ensemble de connexion allongé apte à être introduit à l'intérieur dudit système de tubes, ledit ensemble comportant n contacts électriques espacés selon la longueur dudit ensemble de connexion, la distance entre deux contacts électriques étant égale à k.d (k entier supérieur ou égal à 1), chaque contact électrique étant apte à réaliser une connexion électrique avec la face interne d'un manchon électrique, et n conducteurs électriques, chaque conducteur électrique présentant une première extrémité reliée électriquement à un desdits contacts électriques et une deuxième extrémité apte à être reliée électriquement auxdits appareils électriques.

5. Système selon la revendication 1 **caractérisé en ce que** chaque zone annulaire conductrice est constituée par une couche conductrice annulaire disposée sur la face externe desdits tubes et **en ce que** les éléments de liaison électrique sont des conducteurs électriques fixés sur la face externe desdits tubes.

**6.** Système selon la revendication 1, **caractérisé en ce qu'**au moins certains desdits tubes comportent des électrodes additionnelles isolées électriquement des zones annulaires conductrices, lesdites électrodes additionnelles présentant une face externe conductrice correspondant à une portion de circonférence égale à $\frac{2\pi}{n}$ avec n>2, chaque électrode additionnelle étant raccordée individuellement par un conducteur électrique auxdits appareils électriques.

**7.** Système selon l'une quelconque des revendications 1 à 6, **caractérisé en ce que** lesdits appareils électriques comprennent :

- une source d'alimentation électrique,
- des moyens de mesure de potentiel électrique, et
- des moyens de communication commandables pour relier sélectivement, via lesdits éléments de liaison électrique, chaque électrode à ladite source d'alimentation électrique ou auxdits moyens de mesure de potentiel électrique ou pour la laisser sans connexion électrique.

**Patentansprüche**

**1.** System zum Einspritzen eines fluiden Einspritzmaterials und zum Durchführen elektrischer Messungen in einem Bohrloch, mit einer Vielzahl von Röhren, welche Mittel aufweisen, um miteinander verbunden zu werden, wobei jede Röhre eine Innenseite und eine Außenseite aufweist, wobei die Röhren in ein in den Boden gebohrtes Bohrloch eingeführt werden sollen, **dadurch gekennzeichnet, dass** jede Röhre aus einem isolierenden Material besteht, wobei die Innenwand der Röhren eine Leitung für den Durchfluss eines fluiden Einspritzmaterials bildet, wobei jede Röhre wenigstens eine mit einer verformbaren Manschette versehene Einspritzöffnung aufweist; und dass wenigstens einige der genannten Röhren an ihrer Außenseite einen leitenden ringförmigen Bereich aufweisen, der geeignet ist, eine Elektrode zu bilden, wobei die genannten leitenden Bereiche voneinander isoliert sind, und dass es weiterhin folgendes umfasst:

- elektrische Geräte, welche an der Oberfläche des Bodens angeordnet sind, in dem die Bohrung ausgebildet ist, und
- Elemente zum elektrischen Verbinden, um wenigstens einige der genannten ringförmigen leitenden Bereiche mit den elektrischen Geräten einzeln zu verbinden.

**2.** System nach Anspruch 1, **dadurch gekennzeichnet, dass** jede Röhre an jedem Ende erste Verriegelungsmittel aufweist, dass jeder ringförmige leitende Bereich von einer leitenden Muffe gebildet ist, die ein Verbindungsmittel bildet, das ein erstes und ein zweites Ende sowie eine Innenseite und eine Außenseite aufweist, wobei die Außenseite der Muffen die genannten ringförmigen leitenden Bereiche bilden, wobei die ersten und zweiten Enden der leitenden Muffen mit zweiten Verriegelungsmitteln versehen sind, welche geeignet sind, mit den ersten Verriegelungsmitteln der Röhren zusammenzuwirken, wodurch die Röhren über die leitenden Muffen untereinander verbunden werden.

**3.** System nach Anspruch 2, **dadurch gekennzeichnet, dass** die ersten Verriegelungsmittel der Röhren aus einem Gewinde bestehen, das an der Außenseite der Röhren ausgebildet ist, und dass die zweiten Verriegelungsmittel aus einem Gewinde bestehen, das in der Innenseite der Muffen ausgebildet und geeignet ist, mit einem Gewinde der genannten Röhren zusammenzuwirken, wodurch die Länge der Außenseite einer Muffe größer ist als die ihrer Innenseite.

**4.** System nach irgendeinem der Ansprüche 2 und 3, **dadurch gekennzeichnet, dass** alle Röhren im Wesentlichen die gleiche Länge haben, wodurch der Abstand $\underline{d}$ zwischen den Innenseiten von zwei aufeinanderfolgenden leitenden Muffen im Wesentlichen konstant ist, und dass die Elemente zum elektrischen Verbinden eine langgestreckte Verbindungseinheit aufweisen, welche geeignet ist, innerhalb des Röhrensystems eingeführt zu werden, wobei die Einheit n elektrische Kontakte aufweist, welche entlang der Länge der Verbindungseinheit mit Zwischenraum angeordnet sind, wobei der Abstand zwischen zwei elektrischen Kontakten gleich k.d (k Ganzzahl größer oder gleich 1) ist, wobei jeder elektrische Kontakt geeignet ist, eine elektrische Verbindung mit der Innenseite einer elektrischen Muffe und n elektrischen Leitern herzustellen, wobei jeder elektrische Leiter ein erstes Ende aufweist, das mit einem der elektrischen Kontakte elektrisch verbunden ist, sowie ein zweites Ende, welches geeignet ist, mit den elektrischen Geräten elektrisch verbunden zu werden.

**5.** System nach Anspruch 1, **dadurch gekennzeichnet, dass** jeder leitende ringförmige Bereich von einer leitenden ringförmigen Schicht gebildet ist, welche an der Außenseite der Röhren angeordnet ist, und dass die Elemente zum elektrischen Verbinden elektrische Leiter sind, welche an der Außenseite der Röhren befestigt sind.

**6.** System nach Anspruch 1, **dadurch gekennzeichnet, dass** wenigstens einige der Röhren zusätzlichen Elektroden aufweisen, welche von den leitenden ringförmigen Bereichen elektrisch isoliert sind, wobei die zusätzlichen Elektroden eine leitende Außenseite aufweisen, die einem Umfangsteil gleich $\frac{2\pi}{n}$ mit n > 2 entspricht, wobei jede zusätzliche Elektrode über einen elektrischen Leiter einzeln mit den elektrischen Geräten verbunden ist.

7. System nach irgendeinem der Ansprüche 1 bis 6, **dadurch gekennzeichnet, dass** die genannten elektrischen Geräte folgendes umfassen:

- eine elektrische Versorgungsquelle,
- Mittel zum Messen von elektrischem Potential, und
- steuerbare Verbindungsmittel, um jede Elektrode über die Elemente zum elektrischen Verbinden selektiv mit der elektrischen Versorgungsquelle oder mit den Mitteln zum Messen von elektrischem Potential zu verbinden, oder um sie ohne elektrische Verbindung zu lassen.

**Claims**

1. System for injecting a fluid injection material and taking electrical measurements in a borehole, comprising a plurality of tubes having means of connection to one another, each tube having an internal face and an external face, the said tubes being intended to be introduced into a borehole drilled in the ground, **characterised in that** each tube is made of an insulating material, the internal wall of the said tubes forming a channel for the flow of a fluid injection material, each tube having at least one injection orifice equipped with a deformable manchette; **in that** at least some of the said tubes have a conductive annular region on their external face, which is capable of constituting an electrode; the said conductive regions being insulated from one another; and **in that** it furthermore comprises:

- electrical instruments arranged at the surface of the ground in which the borehole is made; and
- electrical connection elements for individually connecting at least some of the said conductive annular regions to the said electrical instruments.

2. System according to Claim 1, **characterised in that** each tube has first coupling means at each end, and **in that** each conductive annular region consists of a conductive sleeve, constituting a connection means having a first end and a second end, as well as an internal face and an external face, the said external face of the sleeves forming the said conductive annular regions, the first and second ends of the conductive sleeves being provided with second coupling means capable of interacting with the first coupling means of the said tubes, such that the tubes are connected together by the said conductive sleeves.

3. System according to Claim 2, **characterised in that** the first coupling means of the tubes consist of a screw thread made on the external face of the said tubes, and **in that** the second coupling means consist of a screw thread made in the internal face of the said sleeves and capable of interacting with a screw thread of the said tubes, such that the length of the external face of a sleeve is greater than that of its internal face.

4. System according to either one of Claims 2 and 3, **characterised in that** all the tubes have substantially the same length, such that the distance d between the internal faces of two successive conductive sleeves is substantially constant, and **in that** the electrical connection elements comprise an elongate connection assembly capable of being introduced inside the said system of tubes, the said assembly having n electrical contacts spaced over the length of the said connection assembly, the distance between two electrical contacts being equal to k.d (k integer greater than or equal to 1), each electrical contact being capable of establishing an electrical connection with the internal face of an electrical sleeve, and n electrical conductors, each electrical conductor having a first end electrically connected to one of the said electrical contacts and a second end capable of being electrically connected to the said electrical instruments.

5. System according to Claim 1, **characterised in that** each conductive annular region consists of an annular conductive layer arranged on the external face of the said tubes, and **in that** the electrical connection elements are electrical conductors fixed on the external face of the said tubes.

6. System according to Claim 1, **characterised in that** at least some of the said tubes have additional electrodes electrically insulated from the conductive annular regions, the said additional electrodes having a conductive external face corresponding to a circumferential portion equal to $\frac{2\pi}{n}$ with n>2, each additional electrode being connected individually to the said electrical instruments by an electrical conductor.

7. System according to any one of Claims 1 to 6, **characterised in that** the said electrical instruments comprise:

- an electrical power source,
- means for measuring electrical potential, and

- controllable communication means for selectively connecting each electrode, via the said electrical connection elements, to the said electrical power source or to the said electrical potential measurement means, or for leaving it without electrical connection.

FIG.1

FIG.4

FIG.5

FIG.2

FIG.3

FIG.6A

FIG.6B